# EUROPEAN PATENT APPLICATION

(11) **EP 4 852 184 A1**
(43) Date of publication of application: **09.12.2026**
(21) Application number: 25748373.5
(22) Date of filing: 17.01.2025
(51) Int. Cl.: H01M 50/298, H01M 50/213, H01M 50/284

(54) **BATTERY PACK**

(30) Priority: 31.01.2024 JP 2024013412
(71) Applicant: Panasonic Intellectual Property Management Co., Ltd., Kadoma-shi, Osaka 571-0057 (JP)
(72) Inventor: NAITO, Atsushi, Osaka 571-0057 (JP); MATSUSHITA, Fumiya, Osaka 571-0057 (JP); SUMI, Tatsuya, Osaka 571-0057 (JP); NORIMINE, Shota, Osaka 571-0057 (JP); HIRANO, Tatsuya, Osaka 571-0057 (JP)
(74) Representative: Eisenführ Speiser
(86) International application number: PCT/JP2025/001407
(87) International publication number: WO 2025/164377

(57) **Abstract**

A battery pack includes a board holder configured to hold a circuit board connected to a battery block including a plurality of secondary battery cells, to connect an output lead wire to the circuit board. The output lead wire includes a first lead wire and a second lead wire that are routed along a peripheral wall on one side of the board holder. The board holder includes an integrally-formed first clamping piece protruding from an upper portion of the peripheral wall and an integrally-formed second clamping piece protruding from a middle portion of the peripheral wall that is below the first clamping piece, such as to guide the first lead wire therebetween and to route it to a predetermined position. The second clamping piece is integrally formed with a third clamping piece protruding downward from a middle portion of its protruding direction, to guide the second lead wire to a retaining gap between the third clamp piece and the peripheral wall. The first lead wire and the second lead wire are arranged in two rows located above and below the second clamp piece.

## Description

### TECHNICAL FIELD

The present invention relates to a battery pack in which output lead wires are connected to a circuit board.

### BACKGROUND ART

A battery pack equipped with a plurality of secondary battery cells connects an output from a battery block, which contains the plurality of secondary battery cells connected in series and parallel, to a circuit board, and also controls charging and discharging of the battery block by means of, for example, semiconductor elements mounted on the circuit board. In this type of battery pack, the circuit board is secured to the battery block in a state where the circuit board is housed and secured in a board holder. The circuit board, to which positive and negative outputs of the battery block are connected, is connected to output lead wires, in order to charge and discharge the battery block. The output lead wires connected to the circuit board are extended out from the board holder and connected to a charging and discharging connector to be connected externally (see PTL 1). Thus, it is desirable that the output lead wires extended out from the board holder be routed in a compact manner, in order to carry out assembly work smoothly. It is also important that no load be applied to a portion that connects the circuit board and the output lead wires.

Meanwhile, as the capacity of battery packs increases in recent years, it has been common to adopt a battery pack that is provided with a discharge connector for discharging the battery block to a load and a charge connector for charging the battery block separately. This type of battery pack employs a structure in which a thicker lead wire is used for a discharge lead wire that connects the circuit board to the discharge connector so that a high current can be passed during discharge while a thinner lead wire is used for a charge lead wire that connects the circuit board to the charge connector so that it can be charged with a predetermined electric power during charge. However, this structure necessitates two lines of output lead wires for connecting the circuit board to the discharge connector and the charge connector, which makes the wiring of the output lead wires more complicated.

### CITATION LIST

### Patent Literature

PTL 1: Japanese Patent Unexamined Publication No. 2008-166208

### SUMMARY

The present invention has been developed in order to solve the foregoing and other problems, and one of the objects of the invention is to provide a battery pack that allows a plurality of output lead wires connected to a circuit board to be routed compactly while enabling the assembly work to be performed efficiently.

A battery pack according to one aspect of the present invention includes a battery block including a plurality of secondary battery cells, a circuit board connected to the battery block, a board holder configured to hold the circuit board, and an output lead wires connected to the circuit board. The board holder includes resin, and includes a bottom plate and peripheral walls extending upwardly from a peripheral of the bottom plate, and accommodates the circuit board in a space defined by the bottom plate and the peripheral walls. The output lead wire includes a first lead wire and a second lead wire, and the first lead wire and the second lead wire are routed along an outer peripheral surface of a peripheral wall on one side of the board holder among the peripheral walls. The board holder includes a plurality of first clamping pieces each protruding outward from an upper portion of the peripheral wall, and a plurality of second clamping pieces each protruding outward from a middle portion of the peripheral wall that is located below relative to the position of the peripheral wall at which the plurality of first clamping pieces are located, the first clamping pieces and the second clamping pieces being integrally formed with the board holder. The first lead wire is guided between the first clamping pieces and the second clamping pieces and is routed to a predetermined position by retaining it from both the top and the bottom. Each of the second clamping pieces is integrally formed with a third clamping piece protruding downward from a middle portion of its protruding direction and being integrally formed with the second clamping piece. The second lead wire is guided into a retaining gap formed between the third clamping piece and the peripheral wall to route the second lead wire to a predetermined position. The first lead wire and the second lead wire are arranged in two rows above and below the plurality of second clamping pieces.

The battery pack just described has a feature that enables a plurality of output lead wires connected to the circuit board to be routed in a compact manner. Moreover, the battery pack just described achieves a feature that enables efficient assembly and thus improved work efficiency by routing a plurality of output lead wires in a compact manner.

### BRIEF DESCRIPTION OF THE DRAWINGS

[FIG. 1] FIG. 1 is a schematic perspective view illustrating a battery pack according to one exemplary embodiment of the present invention.
[FIG. 2] FIG. 2 is a cross-sectional view of the battery pack of FIG. 1 taken along line II-II.
[FIG. 3] FIG. 3 is a block diagram of a battery pack according to one exemplary embodiment of the present invention.
[FIG. 4] FIG. 4 is a schematic perspective view illustrating the core pack of a battery pack according to one exemplary embodiment of the present invention.
[FIG. 5] FIG. 5 is an exploded perspective view of the core pack illustrated in FIG. 4.
[FIG. 6] FIG. 6 is an enlarged perspective view illustrating a board holder to which a circuit board and output lead wires are secured.
[FIG. 7] FIG. 7 is a bottom perspective view of the board holder illustrated in FIG. 6.
[FIG. 8] FIG. 8 is an exploded perspective view of the circuit board and the board holder illustrated in FIG. 6.
[FIG. 9] FIG. 9 is a cross-sectional view of the board holder illustrated in FIG. 6, taken along line IX-IX.
[FIG. 10] FIG. 10 is a cross-sectional view of the board holder illustrated in FIG. 6, taken along line X-X.
[FIG. 11] FIG. 11 is an enlarged perspective view of the board holder.
[FIG. 12] FIG. 12 is an enlarged perspective view of the board holder illustrated in FIG. 11, as viewed from below.

### DESCRIPTION OF EMBODIMENTS

One key concept underlying the present invention will be described. In a battery pack equipped with a battery block including a large number of secondary battery cells connected in series and parallel, positive and negative outputs of the battery block are disposed at opposite ends of the battery block. Accordingly, the positive and negative outputs of the battery block are connected to opposite ends of a circuit board that is disposed on one surface of the battery block. However, the positive electrode side output that is connected to an end of the circuit board is connected to the semiconductor elements and the like that are mounted to an end portion of the circuit board because charge-discharge switches of semiconductor elements that control charging and discharging are connected to the output side of the battery block. For this reason, the outputs from the semiconductor elements are extended out from a middle portion of the circuit board. It is preferable that the output lead wires that are extended out from a middle portion of the circuit board be routed outside of the circuit board because adverse effects on other mounted components are feared if they are disposed above the circuit board.

Accordingly, a battery pack provided with a discharge lead wire for discharge from a battery block to a load and a charge lead wire for charging the battery block separately requires a structure that enables the charge lead wire and the discharge lead wire to be routed so as not to interfere with each other because it is necessary that both the charge lead wire and the discharge lead wire be routed out from the circuit board. When the charge lead wire and the discharge lead wire are routed on both sides of the board holder housing the circuit board in this way, the width of the board holder increases correspondingly, making it impossible to route the two lead wires compactly. The present invention has been developed to solve this and other problems.

A battery pack according to one embodiment of the present invention includes a battery block including a plurality of secondary battery cells, a circuit board connected to the battery block, a board holder configured to hold the circuit board, and an output lead wire connected to the circuit board. The board holder includes resin, and includes a bottom plate and peripheral walls extending upwardly from a peripheral of the bottom plate, and accommodates the circuit board in a space defined by the bottom plate and the peripheral walls. The output lead wire includes a first lead wire and a second lead wire. The first lead wire and the second lead wire are routed along an outer peripheral surface of a peripheral wall on one side of the board holder among the peripheral walls. The board holder includes a plurality of first clamping pieces each protruding outward from an upper portion of the peripheral wall, and a plurality of second clamping pieces each protruding outward from a middle portion of the peripheral wall, the middle portion located below relative to a position of the peripheral wall at which the plurality of first clamping pieces are located, the plurality of first clamping pieces and the plurality of second clamping pieces being integrally formed with the board holder. The first lead wire is retained between the first clamping pieces and the second clamping pieces to be routed to a predetermined position. Each of the clamping pieces includes a third clamping piece protruding downward from a middle portion of a protruding direction and being integrally formed with the second clamping piece. The second lead wire is guided into a retaining gap formed between the third clamping piece of at least one of the plurality of second clamping pieces and the peripheral wall and is routed to a predetermined position. The first lead wire and the second lead wire are arranged in two rows located above and below the plurality of second clamping pieces.

With the configuration just described, the first lead wire and the second lead wire are routed in two vertical rows along the outer peripheral surface of the peripheral wall on one side of the board holder. This enables the first lead wire and the second lead wire to be routed while making more compact the outer shape of the board holder in which the output lead wires are routed, without increasing its size. In particular, with the configuration described above, the first lead wire, which is guided between the first clamping pieces and the second clamping pieces integrally formed with the peripheral wall of the board holder, is retained from both sides and disposed in position, and at the same time, the second lead wire is guided between a retaining gap formed between the peripheral wall and the third clamping piece, which is integrally formed with the second clamping piece. This achieves a structure that uses the second clamping pieces for securing both the first lead wire and the second lead wire, allowing the first lead wire and the second lead wire to be disposed in position efficiently. Also, arranging the first lead wire and the second lead wire in two rows vertically above and below the second clamping pieces achieves a clean and tidy appearance while electrically insulating the first lead wire and the second lead wire from each other.

In a battery pack according to another embodiment of the present invention, the plurality of first clamping pieces and the plurality of second clamping pieces may be arranged alternately in a staggered manner so as not to overlap each other when viewed in plan.

With the configuration just described, the first clamping pieces and the second clamping pieces, which retain the top and bottom of the first lead wire, are arranged alternately so as not to overlap each other when viewed in plan. This allows the first lead wire to be guided alternately to the lower surface of the first clamping piece and to the upper surface of the second clamping piece, enabling easy and quick wiring. In particular, this structure enables easy wiring even when the first lead wire has a thick and difficult-to-bend structure. In addition, with the configuration just described, the first clamping pieces and the second clamping pieces are arranged alternately even with the first lead wire being retained from both top and bottom sides, allowing either one of the top and bottom thereof to be open at all times. This leads to a feature that enables effective heat dissipation even when the first lead wire is in a state that passes current and generates heat.

In addition, with the configuration just described, the first clamping pieces and the second clamping piece that are arranged so as not to overlap each other when viewed in plan have a feature that allows them to be resin molded using a mold with a simple structure. The reason is that the upper mold, which forms the upper surface side of the second clamping pieces, may be placed without interfering with the first clamping pieces, and the lower mold, which forms the lower surface side of the first clamping pieces, may be placed without interfering with the second clamping pieces. That is, the board holder with the just described structure may be resin molded easily using a pair of upper mold and lower mold.

In a battery pack according to another embodiment of the present invention, each of the first clamping pieces may include a retaining protrusion protruding downward at a distal end of the each of the plurality of clamping pieces, and the first lead wire routed between the plurality of first clamping pieces and the plurality of second clamping pieces is retained in position by means of the retaining protrusion..

With the configuration just described, the distal end of the first clamping piece is provided with the retaining protrusion protruding downward. This allows the first lead wire, which is routed between the first clamping pieces and the second clamping pieces, to be disposed in position while being retained by the retaining protrusion so as not to be pulled out.

In a battery pack according to another embodiment of the present invention, each of the second clamping pieces may include a supporting protrusion protruding upward at a distal end of the each of the plurality of second clamping pieces, and the first lead wire routed between the plurality of first clamping pieces and the plurality of second clamping pieces is supported in position by means of the supporting protrusion of at least one of the plurality of second clamping pieces.

With the configuration just described, the supporting protrusion protruding upward is provided at the distal end of the second clamping piece. This allows the first lead wire, which is routed between the first clamping pieces and the second clamping pieces, to be disposed in position while being supported by the supporting protrusion so as not to be misaligned.

In a battery pack according to another embodiment of the present invention, each of the third clamping pieces may include an interlocking protrusion protruding toward the peripheral wall at a distal end of the each of the third clamping piece, and the second lead wire guided into the retaining gap is retained in position by means of the first interlocking protrusion.

With the configuration just described, the interlocking protrusion protruding toward the peripheral wall is provided at the distal end of the third clamping piece. This allows the second lead wire, which is guided between the third clamping piece and the peripheral wall, to be disposed in position while being retained by the interlocking protrusion in an interlocked state.

In a battery pack according to another embodiment of the present invention, each of the second clamping pieces may be in a plate shape having a width and extending in an extension direction of the peripheral wall and may include a through hole formed in a region excluding an outer peripheral portion of the each of the plurality of second clamping piece, the third clamping piece may be formed along a distal-end open edge of the through hole located at the distal end of each of the plurality of second clamping piece, and the interlocking protrusion may be formed protruding toward the peripheral wall beyond the distal-end open edge.

With the configuration just described, the second clamping pieces are formed in a plate shape having a width and extending in an extension direction of the peripheral wall, the through hole is formed in a region excluding the outer peripheral portion thereof, the third clamping piece is formed along the distal-end open edge of the through hole. Therefore, by using this through hole, the interlocking protrusion of the third clamping piece may be molded using a mold with a simple structure.

In a battery pack according to another embodiment of the present invention, the battery block may include a plurality of parallel units each including a plurality of secondary battery cells each connected in parallel, the plurality of parallel units connected in series; the circuit board may include a connecting lead for detecting a voltage of the parallel units, the connecting lead being routed outside the board holder, and the connecting lead may be disposed on upper surfaces of the plurality of first clamping pieces.

With the just described configuration, the voltage detection line, which is routed out from the board holder to detect the voltage of the battery block, is placed on the upper surfaces of the first clamping pieces, so it has a feature that allows the voltage detection line to be routed while being electrically insulated from the first lead wire and the second lead wire.

In a battery pack according to another embodiment of the present invention, the first lead wire may include a connecting terminal at a distal end of the first lead wire, the board holder may include a mounting base securing the connecting terminal of the first lead wire, the mounting base being integrally formed on an outer peripheral surface of the peripheral wall on which the output lead wire is routed, the circuit board may include a connecting plate for connecting to the connecting terminal of the first lead wire, the connecting plate extending to the mounting base; and the connecting terminal and the connecting plate may be secured to the mounting base by a connecting screw so that the first lead wire is connected to the circuit board.

The just-described configuration has a feature that enables the first lead wire, which is disposed along the peripheral wall, to reliably connect to the circuit board by screw-fastening. In particular, with the structure described above, the mounting base for screw-fastening the connecting terminal provided at the distal end of the first lead wire is integrally formed with the outer peripheral surface of the peripheral wall, and the connecting plate connected to the circuit board is extended to the mounting base. This enables the connecting terminal, which is provided at the distal end of the first lead wire routed along the outer peripheral surface of the peripheral wall, to be secured to the mounting base while connecting the connecting terminal to the connecting plate.

In a battery pack according to another embodiment of the present invention, the mounting base may include a boss having a columnar shape into which the connecting screw is screwed and a flange circumferentially protruding from the boss, and the flange may include a plurality of fourth clamping pieces protruding downward along an outer peripheral surface of the boss and being integrally formed with the flange, so that the second lead wire may be guided into an outer peripheral gap formed between the boss and the fourth clamping pieces so as to be disposed at a predetermined position.

With the configuration just described, the second lead wire, which is routed along the peripheral wall, is guided into the outer peripheral gap formed between the boss and the fourth clamping pieces provided on the flange of the mounting base when the second lead wire is routed so as to extend further beyond the mounting base to which the first lead wire is secured. This allows the second lead wire to circumvent the boss of the mounting base and to be routed without interfering with the first lead wire.

In a battery pack according to another embodiment of the present invention, the flange may include a plurality of through holes formed along the outer peripheral surface of the boss, the fourth clamping pieces may be formed along outer circumferential open edges of these through holes, the outer circumferential open edges being along an outer circumferential edge of the flange, and each of the fourth clamping pieces may include an interlocking protrusion protruding toward the boss beyond the outer circumferential open edge.

With the configuration just described, the interlocking protrusion protruding toward the boss is provided at the distal end of the fourth clamping piece. This allows the second lead wire, which is guided between the fourth clamping piece and the peripheral wall, to be disposed in position while being retained by the interlocking protrusion in an interlocked state. Moreover, with the configuration just described, the flange is provided with the plurality of through holes formed therein, and the fourth clamping pieces are formed along the outer circumferential open edges of the through holes. Therefore, by using these through holes, the interlocking protrusion of the fourth clamping piece may be molded using a mold with a simple structure.

In a battery pack according to another embodiment of the present invention, the first lead wire and the second lead wire each may include a lead wire having flexibility and including a core made of a metal and covered circumferentially with an insulating layer, the first lead wire may include an outer diameter larger than an outer diameter of the second lead wire.

With the configuration just described, while the first lead wire, which is composed of a thicker lead wire, is retained reliably by the first clamping pieces and the second clamping pieces from above and below, the second lead wire, which is composed of a thinner lead wire, can be retained reliably while being guided into a narrow retaining gap, which is formed between the third clamping piece and the peripheral wall.

In a battery pack according to another embodiment of the present invention, the output lead wire may be a positive electrode lead wire, the first lead wire may be a discharge lead wire, and the second lead wire may be a charge lead wire.

With the configuration just described, using the thicker discharge lead wire allows safe current passage even when the discharge current increases momentarily under use conditions of the main device, which is a load. Moreover, even when a high discharge current is passed and heat is generated by Joule heating, the discharge lead wire may be disposed at a location away from the battery block by placing it on the upper side of the second clamping pieces, reducing adverse effects on the battery block resulting from the heat generation of the discharge lead wire.

Hereinafter, the present invention will be described in detail with reference to the drawings. Although the following description uses directional terms and positional terms (for example, "upward", "downward", and other terms including these words) to indicate specific directions and positions as needed, such terms are merely used to facilitate understanding of the invention with reference to the drawings and are intended to limit the technical scope of the present invention. In addition, the same reference signs used throughout the drawings indicate the same or like parts and components.

Furthermore, it should be noted that the following exemplary embodiments are merely examples of the technical idea of the present invention, and therefore do not limit the present invention to the following exemplary embodiments. Moreover, the dimensions, materials, shapes, relative arrangements, and the like of parts and elements described in the following are intended for illustrative purposes only, and should not be construed to limit the scope of the invention, unless specifically stated otherwise. The contents described in one exemplary embodiment or one example may be also applicable to other exemplary embodiments and examples. Furthermore, the sizes of some elements, their positional relationships, and so forth shown in the drawings may be exaggerated for clarity in illustration.

The battery pack of the present disclosure may be utilized in various applications: as a drive electric power source for mobile bodies, such as electric carts, electric scooters, and power assisted bicycles; or as an electric power source for wireless portable electric appliances, such as portable transceivers, electric cleaners, and electric power tools; or as a power supply device in stationary-type electricity storage applications, such as backup power supplies for servers and power supply devices for home use, office use, and factory use; or further, as a drive electric power source for vehicles, such as hybrid electric vehicles and battery electric vehicles. Hereinafter, a battery pack used as a drive electric power source for electric motorcycles will be described as one exemplary embodiment of the present disclosure.

### First Exemplary Embodiment

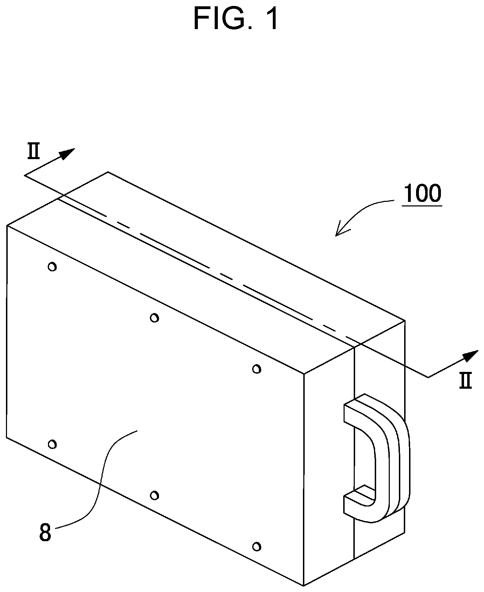

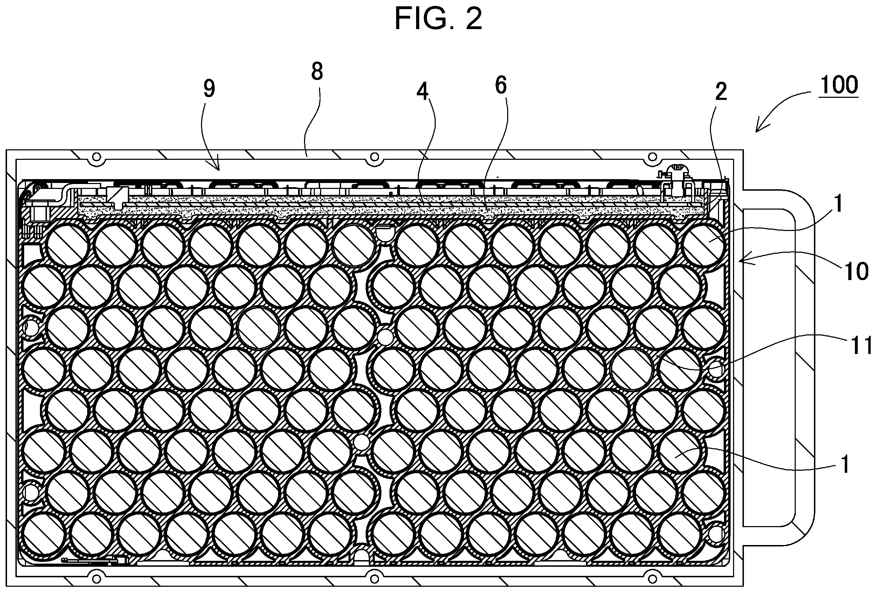

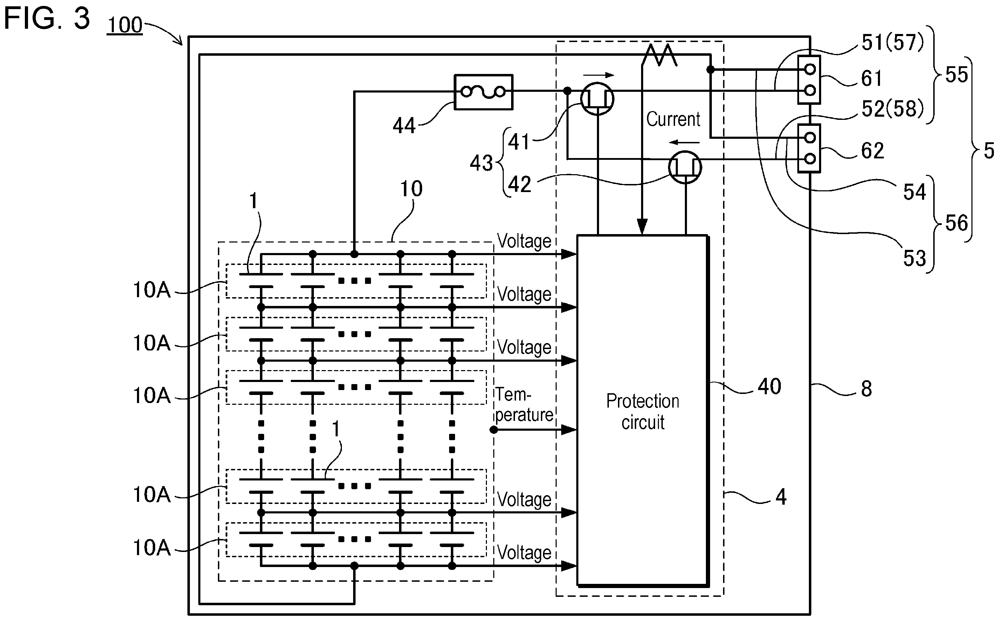

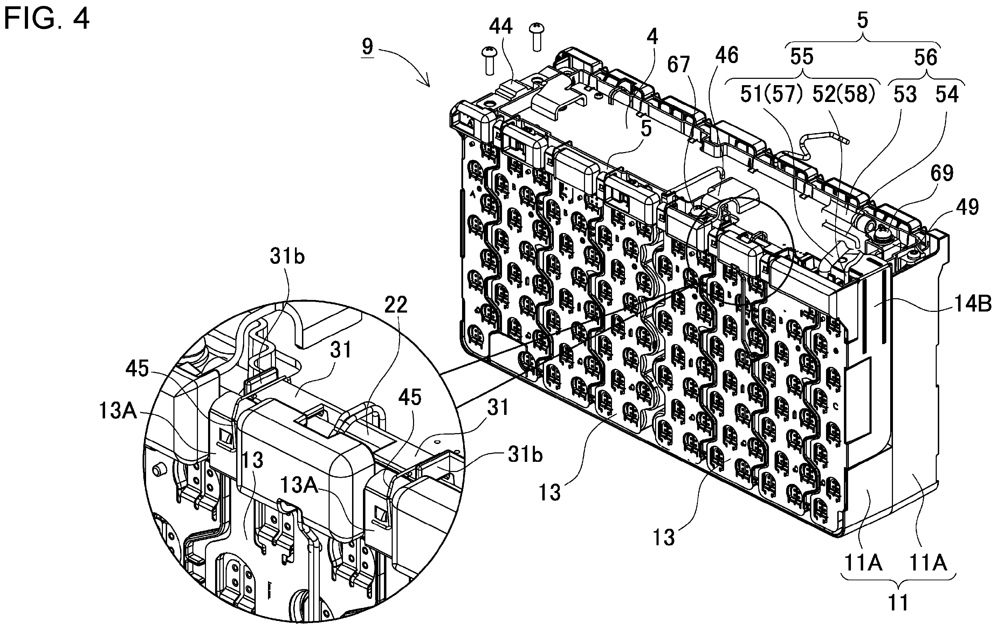

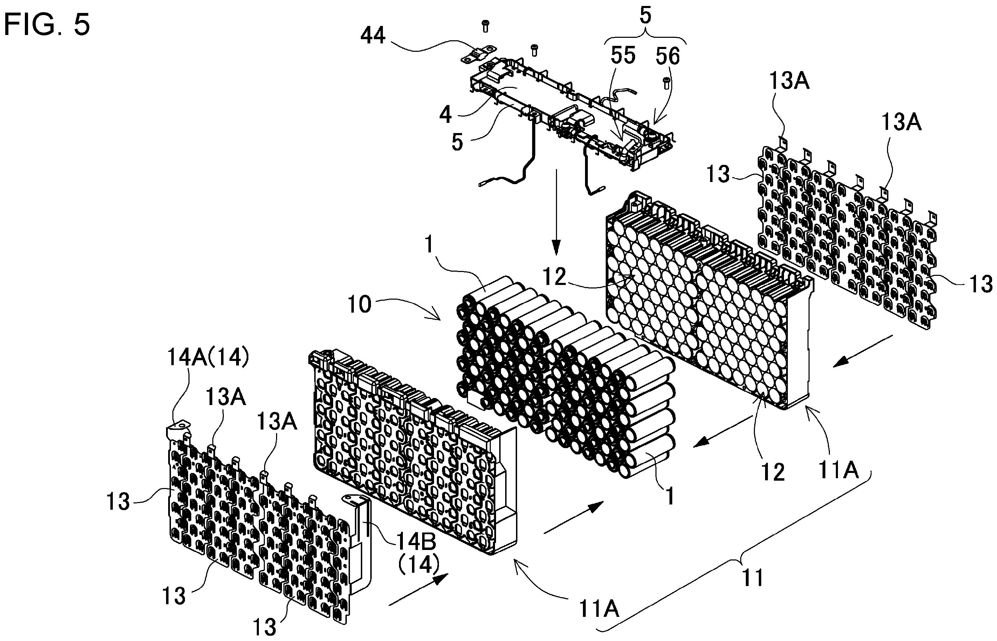

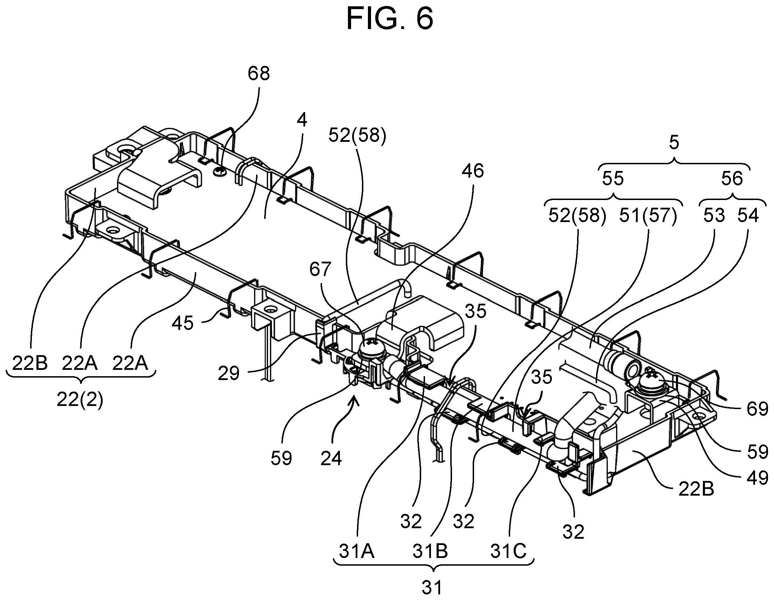

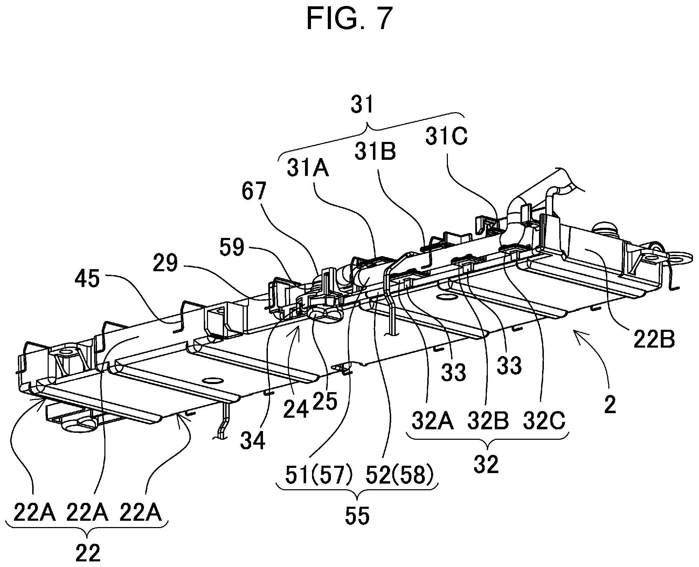

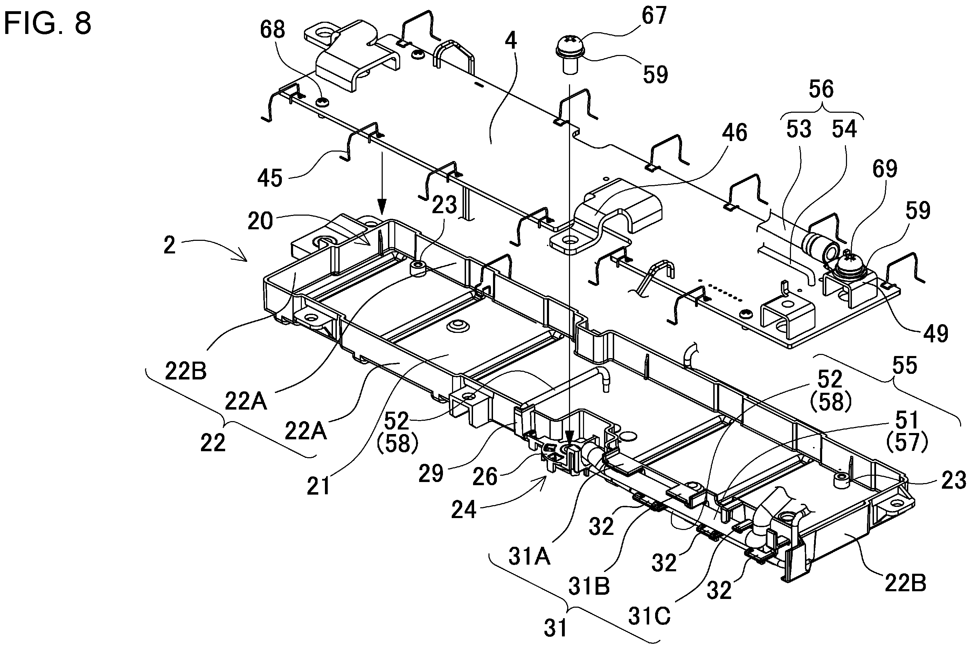

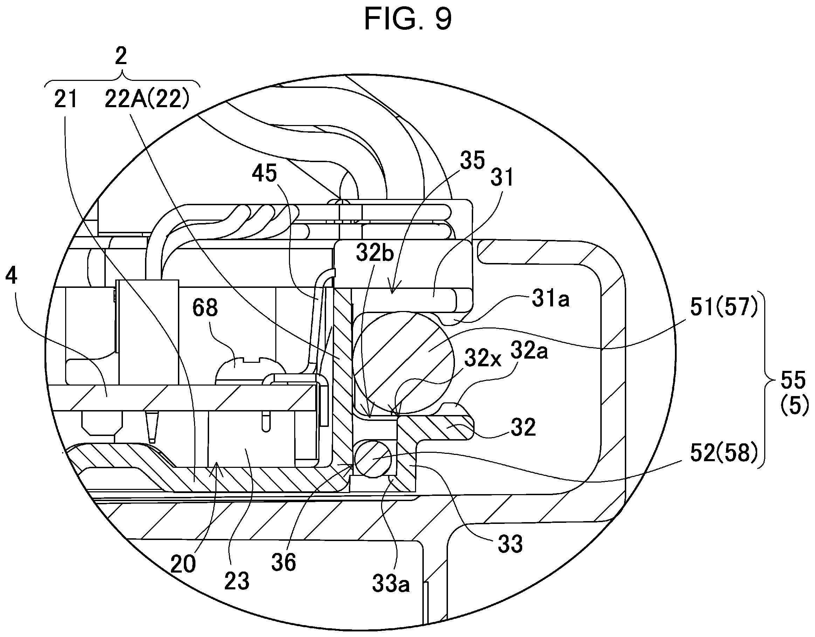

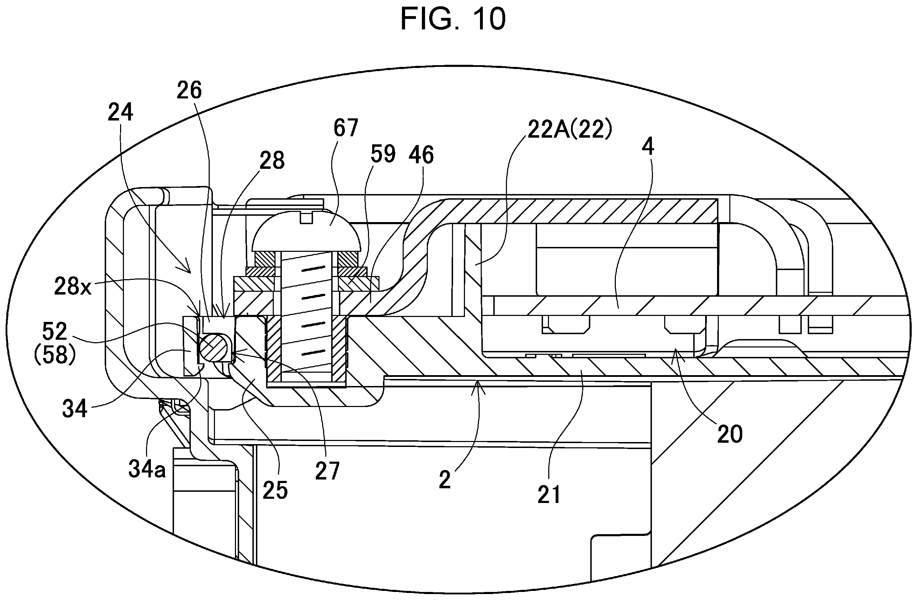

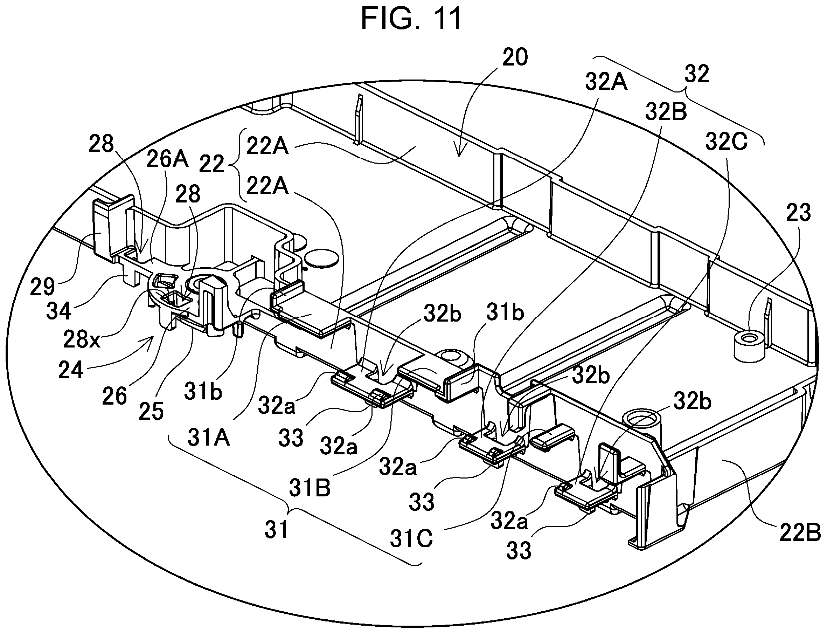

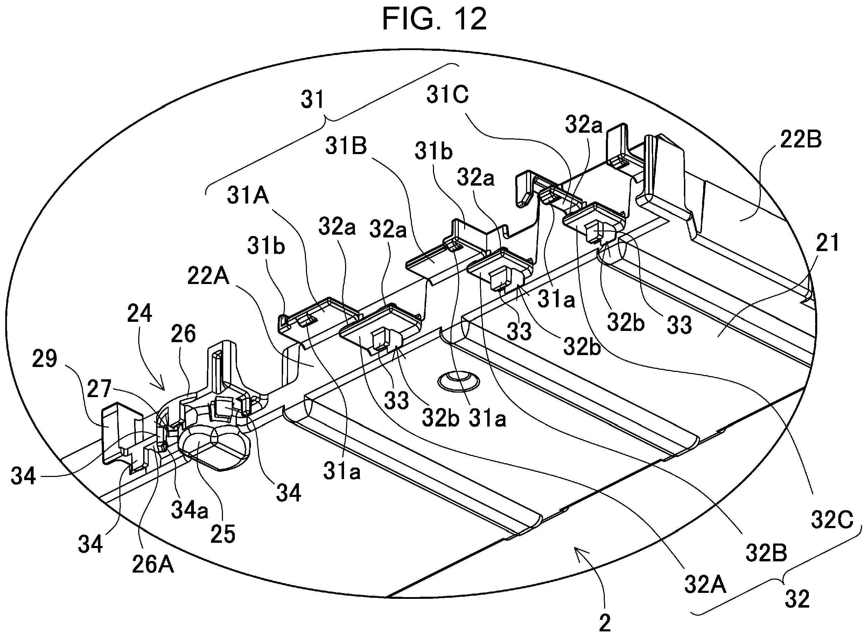

A battery pack according to a first exemplary embodiment of the present invention is shown in FIGS. 1 to 12. In these drawings, FIG. 1 shows a perspective view illustrating a battery pack according to the first exemplary embodiment, FIG. 2 a cross-sectional view of the battery pack of FIG. 1 taken along line II-II, FIG. 3 a block diagram of the battery pack according to the first exemplary embodiment, FIG. 4 a schematic perspective view of a core pack of the battery pack according to the first exemplary embodiment, FIG. 5 an exploded perspective view of the core pack of FIG. 4, FIG. 6 a perspective view of a circuit board and a board holder, FIG. 7 a bottom perspective view of the board holder of FIG. 6, FIG. 8 an exploded perspective view of the circuit board and the board holder of FIG. 6, FIG. 9 an enlarged cross-sectional view of the board holder of FIG. 6 taken along line IX-IX, FIG. 10 an enlarged cross-sectional view of the board holder of FIG. 6 taken along line X-X, FIG. 11 an enlarged perspective view of the board holder, and FIG. 12 an enlarged perspective view of the board holder of FIG. 11 as viewed from below, respectively.

Battery pack 100 illustrated in these drawings includes battery block 10 including a plurality of secondary battery cells 1, circuit board 4 connected to battery block 10, board holder 2 securing circuit board 4, and output lead wire 5 connected to circuit board 4. Battery pack 100 shown in FIGS. 1 and 2 also includes core pack 9 in which board holder 2 securing circuit board 4 is secured to a fixed position of the upper surface of battery block 10, and houses this core pack 9 in outer covering case 8.

### Secondary Battery Cell 1

Secondary battery cell 1 is a secondary battery, which is capable of charging and discharging, and may use a lithium-ion secondary battery. The present invention, however, does not limit secondary battery cell 1 to a lithium-ion battery but may use any type of rechargeable secondary battery, including currently-used secondary batteries, such as nickel metal hydride batteries, nickel cadmium batteries, and lithium polymer secondary batteries, as well as all-solid-state batteries and the like that will be developed in the future. Each of secondary battery cells 1 is a cylindrical battery and includes positive and negative electrodes at opposite ends. The plurality of cylindrical batteries are in a parallel orientation to each other and are arranged in a stacked barrel arrangement in multiple rows and columns. However, the arrangement of the plurality of secondary battery cells 1 is not limited to this example, but any arrangement may be employed as appropriate. For example, it is possible that the plurality of secondary battery cells 1 may be arranged in a matrix configuration. Moreover, although battery pack 100 shown in the drawings use cylindrical batteries for secondary battery cells 1, it is also possible that secondary battery cells 1 may be batteries other than cylindrical batteries, such as prismatic batteries.

### Battery Block 10

Battery block 10 includes a plurality of secondary battery cells 1 housed in battery holder 11 and disposed in position. Battery holder 11 holds secondary battery cells 1 in a parallel orientation so that the end face electrodes of secondary battery cells 1 disposed at each end thereof are positioned on the same plane. Battery holder 11 is provided with a plurality of housing cylinders 12 for individually housing secondary battery cells 1. Battery holder 11 shown in FIG. 5 is divided into two units, left and right holder units 11A, 11A, to have such a structure that two split parts of housing cylinders 12 sandwich secondary battery cells 1 from opposite ends. Battery holder 11 is fabricated of a member that is excellent in insulation property, for example, a resin such as polycarbonate.

The plurality of secondary battery cells 1 housed in battery holder 11 are connected in parallel and series via lead plates 13 connected to the end face electrodes at opposite ends. As illustrated in Fig. 3, battery block 10 is divided into parallel units 10A each including a plurality of secondary battery cells 1 connected in parallel, and also connects a plurality of parallel units 10A in series to increase the output voltage. Battery block 10 shown in FIGS. 2 to 5 includes 14 sets of parallel units 10A each including 8 secondary battery cells 1 connected in parallel. Battery block 10 shown in the drawings uses a total of 112 secondary battery cells 1, to form a 14 series × 8 parallel arrangement, but this arrangement is merely illustrative. The number of series connections or parallel connections may be set as appropriate according to the required specifications.

Battery block 10 is connected to circuit board 4 via output lead plates 14 connected to lead plate 13 disposed on positive and negative outputs of secondary battery cells 1 connected in series and parallel. Battery block 10 shown in the drawings connects positive electrode-side output lead plate 14A to one end (top left in FIG. 4) of circuit board 4 via current interrupting element 44. Also, battery block 10 connects negative electrode-side output lead plate 14B to the other end (bottom right in FIG. 4) of circuit board 4.

### Lead Plate 13

Lead plates 13 connect end face electrodes of secondary battery cells 1 to each other, to connect the plurality of secondary battery cells 1 in parallel and in series. These lead plates 13 may be made of a metal plate that shows good electrical conductivity, such as an aluminum plate or a nickel plate. Furthermore, battery block 10 shown in the drawings connects each of lead plates 13 to circuit board 4 disposed on the upper side of battery holder 11. Lead plates 13 shown in FIG. 4 are provided with connectors 13A, for connecting to circuit board 4, so as to protrude from the upper end. These lead plates 13 allow the voltage of parallel units 10A, in which a plurality of secondary battery cells 1 are connected in parallel to each other, to be input to circuit board 4 via connectors 13A. Connectors 13A are connected to connecting leads 45 connected to circuit board 4, to input the voltage of parallel units 10A into circuit board 4.

### Circuit Board 4

Circuit board 4 includes electronic components mounted thereon that implements protection circuit 40 for controlling charging and discharging of secondary battery cells 1. Circuit board 4 uses a double-sided circuit board semiconductor elements 43 for controlling charging and discharging and other electronic components are mounted on both an obverse side and a reverse side, to arrange various components at their optimum locations. Semiconductor elements 43 include discharge switch 41 that controls discharging of battery block 10 and charge switch 42 that controls charging of battery block 10. Protection circuit 40 detects the voltage, remaining capacity, temperature, current, and the like of secondary battery cells 1 constituting battery block 10 and controls the charge/discharge current, to prevent overcharge and overdischarge of secondary battery cells 1. Moreover, protection circuit 40 may also detect abnormal conditions of secondary battery cells 1 and control the charge/discharge current, to prevent deterioration of secondary battery cells 1 and degradation of their electrical characteristics. Semiconductor elements 43 of protection circuit 40 are, for example, FETs or transistors.

### Output Lead Wire 5

Battery pack 100 connects output lead wires 5, for charging and discharging battery pack 10 or for detecting the voltage of battery block 10 or the voltage of secondary battery cells 1 constituting battery block 10, to circuit board 4. Output lead wires 5 connect battery block 10 to an external load, such as a device main body or a charger, and charge and discharge battery block 10. Alternatively, output lead wires 5 output signals for detecting voltage to an external device. As illustrated in FIG. 3, output lead wires 5 shown in the present exemplary embodiment include positive electrode lead wires 55 connected to the positive electrode side of battery block 10 and negative electrode lead wires 56 connected to the negative electrode side of battery block 10. Positive electrode lead wires 55 is connected to semiconductor element 43 connected to the positive electrode side of battery block 10, on circuit board 4. As illustrated in FIGS. 6 to 10, positive electrode lead wires 55 include first lead wire 51 and second lead wire 52 having different diameters, in which the outer diameter of first lead wire 51 is set larger than the outer diameter of second lead wire 52. In battery pack 100 shown in the drawings, first lead wire 51 having a larger outer diameter is used as discharge lead wire 57 and second lead wire 52 having a smaller outer diameter is used as charge lead wire 58. As illustrated in FIG. 3, discharge lead wire 57, which is first lead wire 51, is connected to discharge connector 61 and is connected to a main device (not shown), which is an external load, via discharge connector 61. Charge lead wire 58, which is second lead wire 52, is connected to charge connector 62 and is connected to a charger (not shown), which is connected externally via charge connector 62.

Furthermore, as illustrated in FIGS. 3 and 6, negative electrode lead wires 56 include third lead wire 53 and fourth lead wire 54 having different diameters. Third lead wire 53 having a larger outer diameter is connected to discharge connector 61 as the negative electrode line to be connected to the load, and fourth lead wire 54 having a smaller diameter is connected to charge connector 62, as the negative electrode line to be connected to the charger. Third lead wire 53 includes connecting terminal 59 at its distal end and is connected by means of connecting screw 69 to output terminal 49 made of metal and secured to one end of circuit board 4. Fourth lead wire 54 is connected directly to circuit board 4 by soldering or the like.

Each of first lead wire 51, second lead wire 52, third lead wire 53, and fourth lead wire 54 is a lead wire having flexibility and including a core made of a metal and covered circumferentially with an insulating layer. Such a lead wire the surface of which is covered with an insulating layer makes wiring simple and easy because it has flexibility while achieving good insulation properties.

### Board Holder 2

Battery holder 2 allows circuit board 4 to be disposed in position. As illustrated in FIGS. 2 and 4, battery pack 100 secures board holder 2 to which circuit board 4 is secured battery holder 11 of battery block 10. Although the present invention does not particularly specify the arrangement of board holder 2, board holder 2 may be disposed and fixed on the upper surface of battery holder 11, as illustrated in FIGS. 2 and 4.

Board holder 2 includes bottom plate 21 and peripheral walls 22 connected to the outer edge of bottom plate 21. Board holder 2 shown in FIG. 3 is provided with peripheral walls 22 around bottom plate 21 so that the overall shape is a shallow box-like shape and the inside of peripheral wall 22 forms housing 20 for housing circuit board 4. Board holder 2 shown in FIGS. 6 to 10 includes a pair of opposing peripheral walls 22A extending longitudinally along both sides of circuit board 4 and a pair of end face peripheral walls 22B connecting the opposite ends of the pair of opposing peripheral walls 22A. Board holder 2 is provided with bottom plate 21 and peripheral walls 22 integrally formed by a resin. The resin used for forming board holder 2 may be a material such as polycarbonate, which provides excellent heat resistance and impact resistance,. In board holder 2 shown in the drawings, circuit board 4 is disposed on bottom plate 21 with a clearance gap provided therebetween so that electronic components can be mounted also on the reverse side of circuit board 4. Board holder 2 is provided with support base 23 protruding from bottom plate 21, and circuit board 4 is secured by securing screw 68 with circuit board 4 placed on support base 23.

Moreover, board holder 2 allows two positive-electrode-side lead wires 55 connected to circuit board 4 to be routed along the outer peripheral surface of one of opposing peripheral walls 22A, which is peripheral wall 22 on one side. The distal ends of two positive electrode lead wires 55 routed along peripheral wall 22 are connected to a middle portion of circuit board 4, and two positive electrode lead wires 55 are routed so as to extend from a longitudinally middle portion of peripheral wall 22 toward one end portion thereof. As described previously, positive electrode lead wires 55 include first lead wire 51 and second lead wire 52 having different diameters, and discharge lead wire 57, which is first lead wire 51 having a larger outer diameter, and charge lead wire 58, which is second lead wire 52 having a smaller outer diameter, are routed along the peripheral wall and secured to a fixed position.

### First Clamping Piece 31 and Second Clamping Piece 32

In order to dispose two positive electrode lead wires 55 in position, board holder 2 is provided with a plurality of first clamping pieces 31 protruding outward from an upper portion of peripheral wall 22 and a plurality of second clamping pieces 32 protruding outward from a middle portion of the peripheral wall 22 that is blow relative to the position where first clamping pieces 31 are located. Board holder 2 shown in the drawings is provided with first clamping pieces 31 at the upper edge of peripheral wall 22 and second clamping pieces 32 in a middle portion of peripheral wall 22 between the top and the bottom. The plurality of first clamping pieces 31, which are formed at the upper edge of peripheral wall 22, are disposed at predetermined intervals along the extension direction of peripheral wall 22. The plurality of second clamping pieces 32, which are formed on a middle portion between the top and the bottom of peripheral wall 22, are also disposed at predetermined intervals along the extension direction of peripheral wall 22. The plurality of first clamping pieces 31 and the plurality of second clamping pieces 32 are arranged in a positional relationship such as to be parallel to each other and are formed alternately along the extension direction of peripheral wall 22, to have a structure that clamps and retains first lead wire 51, which is guided between first clamping piece 31 and second clamping piece 32, vertically from both the top and the bottom. The structure that alternately arranges the plurality of first clamping pieces 31 and the plurality of second clamping pieces 32, which are disposed vertically, is able to provide open areas 35 between adjacent first clamping pieces 31 and between adjacent second clamping pieces 32, which has a feature that enables effective heat dissipation even in a state that first lead wire 51 passes current and generates heat. The vertical gap between first clamping pieces 31 and second clamping pieces 32, which are arranged vertically apart, is set to be substantially equal to, or slightly greater than, the outer diameter of first lead wire 51 so that first lead wire 51, which is guided between first clamping pieces 31 and second clamping pieces 32, can be retained reliably.

Board holder 2 shown in the drawings includes three first clamping pieces 31, arrayed from a middle portion between the left and right of peripheral wall 22A toward the right end in the drawings. Of the three first clamping pieces 31, first clamping piece 31A located on the left side in the drawings and first clamping piece 31B located in the middle are in a plate shape extending along the extension direction of peripheral wall 22 to have a wider width, while first clamping piece 31C located on the right side has a narrower width. First clamping pieces 31A and 31B shown in the drawings have a width greater than their protruding size from peripheral wall 22, while first clamping piece 31C has a greater protruding size from peripheral wall 22 than its width.

First clamping pieces 31A and 31B with this shape has a structure such as to place connecting leads 45, which are drawn out from circuit board 4 and connected to connectors 13A of lead plates 13, on their upper surfaces, to insulate connecting leads 45 from discharge lead wire 57 and charge lead wire 58, which are positive electrode lead wires 55. Thus, the structure of placing first clamping pieces 31A and 31B above discharge lead wire 57, which is first lead wire 51, uses first clamping pieces 31A and 31B also for insulating walls for reliably insulating connecting lead 45 from positive electrode lead wire 55. Moreover, first clamping pieces 31A and 31B shown in the drawings are provided with upstanding wall 31b at their end edge of their width direction, to prevent misalignment of connecting lead 45 by means of this upstanding wall 31b.

First clamping piece 31 includes retaining protrusion 31a protruding downward, which is provided on the lower surface of its distal end. First clamping piece 31 with this shape allows first lead wire 51 routed between the plurality of first clamping pieces 31 and the plurality of second clamping pieces 32, which are disposed alternately, to be retained and disposed in position by retaining protrusion 31a. Retaining protrusion 31a shown in the drawings is in a centrally convex shape with an arch-like shape when viewed from side. This retaining protrusion 31a has a shape such as to be gradually lowered from the apex of the arch-like shape toward the distal end of first clamping piece 31 and also to be gradually lowered from the apex of the arch-like shape toward the rear end of first clamping piece 31. Retaining protrusion 31a with this shape can retain first lead wire 51 stably, while guiding it smoothly along the inclined surface of the arch-like shape, and while allowing the outer peripheral surface of first lead wire 51 that is guided between first clamping piece 31 and second clamping piece 32 to extend along the inclined surface of the arch-like shape.

Second clamping pieces 32 are each in a plate shape having a lateral width and extended toward the extension direction of peripheral wall 22 and each include three second clamping pieces 32A, 32B, and 32C at positions that do not face the plurality of first clamping pieces 31A, 31B, and 31C, which are provided at the upper end of opposing peripheral wall 22A. Second clamping piece 32A shown in the drawings has a width greater than its protruding size from peripheral wall 22, while second clamping pieces 32B and 32C have a width substantially equal to their protruding size from peripheral wall 22.

Second clamping piece 32 includes supporting protrusion 32a protruding upward, which is provided on the upper surface of its distal end. Second clamping piece 32 with this shape allows first lead wire 51 routed between the plurality of first clamping pieces 31 and the plurality of second clamping pieces 32, which are disposed alternately, to be disposed in position while being supported by supporting protrusion 32a so as not to be misaligned. Supporting protrusion 32a shown in the drawings is in an arch-like shape when viewed from side. This supporting protrusion 32a has a shape such as to be gradually lowered from the apex of the arch-like shape toward the distal end of second clamping piece 32 and also to be gradually lowered from the apex of the arch-like shape toward the rear end of second clamping piece 32. Supporting protrusion 32a with this shape can support first lead wire 51, while guiding it smoothly along the inclined surface of the arch-like shape, and while allowing the outer peripheral surface of first lead wire 51 that is guided between first clamping piece 31 and second clamping piece 32 to extend along the inclined surface of the arch-like shape. Second clamping pieces 32A and 32B shown in the drawings each include supporting protrusions 32a on opposite sides of their distal ends, and second clamping piece 32C includes supporting protrusion 32a on one side of its distal end, on the left side in the drawings.

Furthermore, as illustrated in the drawings, the plurality of first clamping pieces 31 and the plurality of second clamping pieces 32 are arranged alternately in a staggered manner so as not to overlap each other when viewed in plan. This surface has a feature of enabling simple and quick wiring by guiding first lead wire 51 alternately to the lower surfaces of first clamping pieces 31 and to the upper surfaces of second clamping pieces 32. For example, if the first clamping pieces provided with the retaining protrusions and the second clamping pieces provided with the supporting protrusions are arranged so as to face each other vertically, the first lead wire needs to be inserted from gaps between the retaining protrusions of the first clamping pieces and the supporting protrusions of the second clamping pieces that face each other, which requires the first clamping pieces or the second clamping pieces to undergo elastic deformation, or requires the insulation coating of the first lead wire to undergo elastic deformation. In contrast, the structure of arranging the plurality of first clamping pieces 31 and the plurality of second clamping pieces 32 vertically so as not to overlap each other makes it possible to guide a wire alternately to retaining protrusions 31a of first clamping pieces 31 and to supporting protrusions 32a of second clamping pieces 32 while routing the wire, so it has a feature of achieving simple and easy wiring even with a thick and difficult-to-bend lead wire. This is advantageous in a structure in which thick discharge lead wire 57 is disposed between first clamping pieces 31 and second clamping pieces 32.

Moreover, the structure in which the plurality of first clamping pieces 31 and the plurality of second clamping pieces 32 are arranged so as not to overlap each other when viewed in plan has a feature that allows first clamping pieces 31 and second clamping pieces 32 to be resin molded using a mold with a simple structure. The reason is that an upper mold for forming the upper surface side of second clamping pieces 32, may be placed without interfering with the first clamping pieces 31, and a lower mold for forming the lower surface side of first clamping pieces 31 may be placed without interfering with second clamping pieces 32. This means that board holder 2 with the structure described above may be resin molded easily using a pair of upper and lower molds.

### Third Clamping Piece 33

Furthermore, second clamping piece 32 includes third clamping piece 33 integrally formed therewith, which protrudes downward from a middle portion of the protruding direction. As illustrated in FIG. 9, second clamping piece 32 with this shape forms retaining gap 36 between third clamping piece 33 and peripheral wall 22 and has a structure that guides second lead wire 52 into this retaining gap 36 to be routed to a predetermined position. Third clamping piece 33 shown in FIG. 9 includes interlocking protrusion 33a protruding toward peripheral wall 22 at its distal end. This third clamping piece 33 retains second lead wire 52, which is guided into retaining gap 36, in position by means of interlocking protrusion 33a. Because second clamping piece 32 with the structure described above guides and retains second lead wire 52 into retaining gap 36 formed between peripheral wall 22 and third clamping piece 33, which is provided in the middle portion, it is suitable to route charge lead wire 58, which has a smaller outer diameter than discharge lead wire 57.

Furthermore, second clamping pieces 32 shown in the drawings are formed into a laterally wide plate-shaped overall shape and also provided with through holes 32b formed in a region excluding their outer peripheral portions. Second clamping piece 32 allows third clamping piece 33 to be molded along distal-end open edge 32x, which is the open edge of through hole 32b and is located at the distal end of second clamping piece 32. Furthermore, interlocking protrusion 33a is molded at the distal end of third clamping piece 33 such that it protrudes toward peripheral wall 22 side beyond distal-end open edge 32x when viewed in plan. Second clamping piece 32 with this structure forms the clamping piece utilizing the through hole. Therefore, by using this through hole, interlocking protrusion 33a of third clamping piece 33 can be molded with use of a mold with a simple structure. The reason is that interlocking protrusion 33a of third clamping piece 33 may be formed while forming the through hole utilizing a forming rod that protrudes from the molding surface of the upper mold for forming the upper surface of second clamping piece 32.

As described above, first lead wire 51 is guided and retained between first clamping pieces 31 and second clamping pieces 32 integrally formed with peripheral wall 22, and second lead wire 52 is guided and retained in retaining gap 36 provided between second clamping pieces 32 and peripheral wall 22, whereby discharge lead wire 57 and charge lead wire 58, which are two positive electrode lead wires 55 routed along the outer peripheral surface of peripheral wall 22, are located vertically above and below second clamping pieces 32 so as to be routed in two rows. Thus, the structure in which first lead wire 51 and second lead wire 52 are routed in two vertical rows along the outer peripheral surface of peripheral wall 22 on one side of board holder 2 enables first lead wire 51 and second lead wire 52 to be routed in a space-saving manner while making more compact the outer shape of board holder 2 in which two positive-electrode-side lead wires 55 are routed, without increasing its size. Moreover, first lead wire 51 and the second lead wire 52 are disposed above and below second clamping pieces 32 and are routed in two rows, so that a clean and tidy appearance is obtained while electrically insulating them by second clamping pieces 32.

### Mounting Base 24

In the manner described above, first lead wire 51, which is routed along the outer peripheral surface of peripheral wall 22, is connected to circuit board 4 in a central part of board holder 2. In board holder 2 shown in FIGS. 10 to 12, mounting base 24 for securing the distal end of first lead wire 51, integrally formed therewith, is provided on the outer peripheral surface of peripheral wall 22 on which output lead wire 5 is routed. Mounting base 24 shown in the drawings has a thickness that is about half the height of peripheral wall 22, which is a height that allows connecting terminal 59 provided at the distal end of first lead wire 51, which is disposed between first clamping pieces 31 and second clamping pieces 32, to be placed thereto easily. As connecting terminal 59, a crimp terminal having a screw hole is secured to first lead wire 51. To circuit board 4, connecting plate 46 for connecting to connecting terminal 59 of first lead wire 51 is connected, and this connecting plate 46 is disposed beyond peripheral wall 22 so as to extend from circuit board 4 to mounting base 24.

Mounting base 24 includes columnar-shaped boss 25, into which connecting screw 67 is screwed, at its central part. Connecting screw 67 penetrating through connecting terminal 59 and connecting plate 46 is screwed into boss 25 with connecting terminal 59 of first lead wire 51 overlaid on connecting plate 46 stacked on the upper surface of boss 25, thereby connecting first lead wire 51 to circuit board 4. The securing structure described above has a feature that enables even thick and difficult-to-bend discharge lead wire 57 to be connected to circuit board 4 easily and reliably. In particular, connecting the lead wire with use of connecting plate 46 and connecting terminal 59 achieves an ideal connection in a low resistance state.

### Fourth Clamping Piece 34

As illustrated in FIG. 11, mounting base 24 further includes flange 26 circumferentially protruding from columnar-shaped boss 25. This flange 26 is in a disk shape that is along the outer contour of boss 25 and is integrally formed with a plurality of fourth clamping pieces 34 protruding downward along the outer peripheral surface of boss 25. As illustrated in FIG. 12, mounting base 24 with this shape forms outer peripheral gap 27 between boss 25 and fourth clamping pieces 34 and has a structure in which second lead wire 52 is guided into this outer peripheral gap 27 and routed to a predetermined position. With this structure, second lead wire 52, which is routed along peripheral wall 22, is guided into outer peripheral gap 27 formed between boss 25 and fourth clamping pieces 34 provided on flange 26 of mounting base 24 when second lead wire 52 is routed so as to extend further beyond mounting base 24 to which first lead wire 51 is secured. This allows second lead wire 52 to circumvent boss 25 of mounting base 24 and to be routed without interfering with first lead wire 51.

Each of fourth clamping pieces 34 shown in FIG. 12 includes interlocking protrusion 34a protruding toward boss 25 at its distal end. This fourth clamping piece 34 has a structure that retains second lead wire 52, which is guided into outer peripheral gap 27, in position by means of interlocking protrusion 34a. Second clamping piece 32 with the structure described above allows second lead wire 52, which is guided into outer peripheral gap 27 formed between boss 25 and fourth clamping piece 34 provided on the outer peripheral portion of flange 26, to circumvent boss 25 around the outer peripheral surface of boss 25, so it is suitable to route charge lead wire 58, which has a smaller outer diameter than discharge lead wire 57.

Moreover, flange 26 shown in FIGS. 10 to 12 includes a plurality of through holes 28 formed along the outer peripheral surface of boss 25, and fourth clamping pieces 34 are formed along outer circumferential open edges 28x of these through holes 28, which extend along the outer circumferential edge of flange 26. Furthermore, the distal end of each of fourth clamping pieces 34 protrudes toward boss 25 beyond outer circumferential open edge 28x when viewed in plan to form interlocking protrusion 34a. Mounting base 24 with this structure forms clamping pieces 34 utilizing through holes 28 in flange 26. Therefore, interlocking protrusions 34a of fourth clamping pieces 34 may be molded with use of a mold with a simple structure. The reason is that interlocking protrusion 34a of fourth clamping piece 34 may be formed while forming the through hole utilizing a forming rod that protrudes from the molding surface of the upper mold for forming the upper surface of mounting base 24.

As described above, the structure in which mounting base 24 is provided on the outer peripheral surface of peripheral wall 22 has a feature that discharge lead wire 57, which is first lead wire 51 routed along the outer peripheral surface of peripheral wall 22, can be connected reliably to circuit board 4 via connecting terminal 59. In addition, with mounting base 24 with the structure described above, charge lead wire 58, which is second lead wire 52 routed beyond mounting base 24 along first lead wire 51, is secured to a fixed position while allowing it to circumvent boss 25, to be connected to circuit board 4. Herein, second lead wire 52 is routed along boss 25 in the lower surface of flange 26, further passed through the gap between peripheral wall 22 and fourth clamping piece 34 provided in extension portion 26A of flange 26, and thereafter drawn upward along vertical wall portion 29 formed on the outer peripheral surface of peripheral wall 22. Furthermore, second lead wire 52 is extended to a central part of circuit board 4 and secured to circuit board 4 by soldering or the like. Thus, the structure in which second lead wire 52 is secured to a fixed position by fourth clamping pieces 34 provided on mounting base 24 has a feature that it is able to effectively prevent contact failure from occurring over time at the connecting portion between second lead wire 52 and circuit board 4.

### Potting Resin 6

As illustrated in FIG. 2, board holder 2 as described above, in which circuit board 4 connecting to output lead wires 5 is secured to housing 20, may be filled with potting resin 6, to embed circuit board 4 therein. Potting resin 6 is a resin that shows fluidity when in an uncured state and cures, after being injected and filled into board holder 2, to embed circuit board 4 therein. Suitable for potting resin 6 is, for example, a transparent urethane resin. Urethane resin is a resin that is cured through a chemical reaction between a polyol and an isocyanate, which is a curing agent. However, for the potting resin, it is also possible to use any type of resin that shows fluidity when uncured and is capable of embedding circuit board 4 into board holder 2 after being cured, such as epoxy resin or silicone resin, for example.

Although not shown in the drawings, battery pack 100 described above may allow core pack 9 to be housed in a water resistant inner bag, which is housed in outer covering case 8. The inner bag is fabricated of a highly water resistant resin and is formed into a box-shaped or a pouch-shaped form that can house the core pack. Also, the core pack is housed inside, and output lead wire 5 is routed outside. Such an inner bag may use, for example, a resin that is excellent in properties such as heat resistance, flame resistance, flexibility, and wear resistance. Examples include polyolefin resins and polyethylene resins, such as PET resin. It is also possible to use a heat-shrinkable tube, which shrinks due to heat.

### INDUSTRIAL APPLICABILITY

The battery pack according to the present invention may suitably be used as a drive electric power source for mobile bodies such as, in addition to power assisted bicycles, electric carts and electric scooters, and as an electric power source for portable transceivers and an electric power source for wireless portable electric appliances, such as electric cleaners and electric power tools, as well as a backup power supply for servers and a stationary-type electricity storage device for home use, office use, and factory use.

### REFERENCE MARKS IN THE DRAWINGS

- 100: battery pack
- 1: secondary battery cell
- 2: board holder
- 4: circuit board
- 5: output lead wire
- 6: potting resin
- 8: outer covering case
- 9: core pack
- 10: battery block
- 10A: parallel unit
- 11: battery holder
- 11A: holder unit
- 12: housing cylinder
- 13: lead plate
- 13A: connector
- 14: output lead plate
- 14A: positive electrode-side output lead plate
- 14B: negative electrode-side output lead plate
- 20: housing
- 21: bottom plate
- 22: peripheral wall
- 22A: opposing peripheral wall
- 22B: end face peripheral wall
- 23: support base
- 24: mounting base
- 25: boss
- 26: flange
- 26A: extension
- 27: outer peripheral gap
- 28: through hole
- 28x: outer circumferential open edge
- 29: vertical wall portion
- 31, 31A, 31B, 31C: first clamping piece
- 31a: retaining protrusion
- 31b: upstanding wall
- 32, 32A, 32B, 32C: second clamping piece
- 32a: supporting protrusion
- 32b: through hole
- 32x: distal-end open edge
- 33: third clamping piece
- 33a: interlocking protrusion
- 34: fourth clamping piece
- 34a: interlocking protrusion
- 35: open area
- 36: retaining gap
- 40: protection circuit
- 41: discharge switch
- 42: charge switch
- 43: semiconductor element
- 44: current interrupting element
- 45: connecting lead
- 46: connecting plate
- 49: output terminal
- 51: first lead wire
- 52: second lead wire
- 53: third lead wire
- 54: fourth lead wire
- 55: positive electrode lead wire
- 56: negative electrode lead wire
- 57: discharge lead wire
- 58: charge lead wire
- 59: connecting terminal
- 61: discharge connector
- 62: charge connector
- 67: connecting screw
- 68: securing screw
- 69: connecting screw

## Claims

1. A battery pack comprising:
a battery block including a plurality of secondary battery cells;
a circuit board connected to the battery block;
a board holder configured to hold the circuit board; and
an output lead wire connected to the circuit board, wherein
the board holder includes resin, and includes a bottom plate and peripheral walls extending upwardly from a peripheral of the bottom plate, and accommodates the circuit board in a space defined by the bottom plate and the peripheral walls;;
the output lead wire includes a first lead wire and a second lead wire;
the first lead wire and the second lead wire are routed along an outer peripheral surface of a peripheral wall on one side of the board holder among the peripheral walls;
the board holder includes:
a plurality of first clamping pieces each protruding outward from an upper portion of the peripheral wall; and
a plurality of second clamping pieces each protruding outward from a middle portion of the peripheral wall, the middle portion located below relative to a position of the peripheral wall at which the plurality of first clamping pieces are located;
the plurality of first clamping pieces and the plurality of second clamping pieces being integrally formed with the board holder;
the first lead wire is retained between at least one of the plurality of first clamping pieces and at least one of the plurality of second clamping pieces to be routed to a predetermined position;
each of the plurality of second clamping pieces includes a third clamping piece protruding downward from a middle portion of a protruding direction and being integrally formed with the second clamping piece;
the second lead wire is guided into a retaining gap formed between the third clamping piece of at least one of the plurality of second clamping pieces and the peripheral wall and is routed to a predetermined position; and
the first lead wire and the second lead wire are arranged in two rows located above and below the plurality of second clamping pieces.

2. The battery pack according to claim 1, wherein
the plurality of first clamping pieces and the plurality of second clamping pieces are arranged alternately in a staggered manner so as not to overlap each other when viewed in plan.

3. The battery pack according to claim 2, wherein:
each of the plurality of first clamping pieces includes a retaining protrusion protruding downward at a distal end of the each of the plurality of first clamping pieces; and
the first lead wire routed between the plurality of first clamping pieces and the plurality of second clamping pieces is retained in position by means of the retaining protrusion.

4. The battery pack according to claim 2, wherein:
each of the plurality of second clamping pieces include a supporting protrusion protruding upward at a distal end of the each of the plurality of second clamping pieces; and
the first lead wire routed between the plurality of first clamping pieces and the plurality of second clamping pieces is supported in position by means of the supporting protrusion of at least one of the plurality of second clamping pieces.

5. The battery pack according to claim 2, wherein:
the third clamping piece includes a first interlocking protrusion protruding toward the peripheral wall at a distal end of the third clamping piece; and
the second lead wire guided into the retaining gap is retained in position by means of the first interlocking protrusion.

6. The battery pack according to claim 5, wherein:
each of the plurality of second clamping pieces is in a plate shape having a width and extending in an extension direction of the peripheral wall and includes a through hole formed in a region excluding an outer peripheral portion of the each of the plurality of second clamping pieces; and
the third clamping piece is formed along a distal-end open edge of the through hole located at the distal end of each of the plurality of second clamping pieces, and the first interlocking protrusion is formed protruding beyond the distal-end open edge toward the peripheral wall.

7. The battery pack according to any one of claims 1 to 6, wherein:
the battery block includes a plurality of parallel units connected in series, each of the plurality of parallel units including a plurality of secondary battery cells each connected in parallel;
the circuit board includes a connecting lead for detecting a voltage of the parallel units, the connecting lead extended outside the board holder; and
the connecting lead is disposed on upper surfaces of the plurality of first clamping pieces.

8. The battery pack according to any one of claims 1 to 6, wherein:
the first lead wire includes a connecting terminal at a distal end of the first lead wire, the distal end being closer to the circuit board than an other end of the first lead wire;
the board holder includes a mounting base securing the connecting terminal of the first lead wire, the mounting base being integrally formed on an outer peripheral surface of the peripheral wall on which the output lead wire is routed;
the circuit board includes a connecting plate connecting to the connecting terminal of the first lead wire, the connecting plate extending to the mounting base; and
the connecting terminal and the connecting plate are secured to the mounting base by a connecting screw so that the first lead wire is connected to the circuit board.

9. The battery pack according to claim 8, wherein:
the mounting base includes a boss having a columnar shape into which the connecting screw is screwed, and a flange protruding in a circumferential direction of the boss;
the flange includes a plurality of fourth clamping pieces protruding downward along an outer peripheral surface of the boss and being integrally formed with the flange; and
the second lead wire is guided into an outer peripheral gap formed between the boss and the plurality of fourth clamping pieces so as to be disposed at a predetermined position.

10. The battery pack according to claim 9, wherein:
the flange includes a plurality of through holes formed along the outer peripheral surface of the boss; and
the plurality of fourth clamping pieces are formed along outer circumferential open edges of the plurality of through holes, the outer circumferential open edges being along an outer circumferential edge of the flange, and each of the plurality of fourth clamping pieces includes a second interlocking protrusion protruding toward the boss beyond the outer circumferential open edge.

11. The battery pack according to any one of claims 1 to 10, wherein:
the first lead wire and the second lead wire each include a lead wire having flexibility and including a core made of a metal and covered circumferentially with an insulating layer; and
the first lead wire includes an outer diameter larger than an outer diameter of the second lead wire.

12. The battery pack according to claim 11, wherein
the output lead wire is a positive electrode lead wire, the first lead wire is a discharge lead wire, and the second lead wire is a charge lead wire.
